Europäisches Patentamt

European Patent Office

Office européen des brevets

(19)

(11) **EP 0 991 695 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: **99917985.6**

(22) Anmeldetag: **15.04.1999**

(51) Int Cl.$^7$: **C08G 65/20**, C08G 65/30, C08G 65/32

(86) Internationale Anmeldenummer:
**PCT/EP99/02545**

(87) Internationale Veröffentlichungsnummer:
**WO 99/054382 (28.10.1999 Gazette 1999/43)**

(54) **HERSTELLUNG VON POLYTETRAHYDROFURAN MIT ENDSTÄNDIGEN HYDROXYLGRUPPEN DURCH WECHSEL VON KONTINUIERLICHER UND DISPERSER PHASE**

PRODUCTION OF POLYTETRAHYDROFURAN WITH TERMINAL HYDROXYL GROUPS BY CHANGING THE CONTINUOUS AND DISPERSED PHASE

PRODUCTION DE POLYTETRAHYDROFURANE CONTENANT DES GROUPES HYDROXYL TERMINAUX PAR CHANGEMENT D'UNE PHASE CONTINUE ET DISPERSEE

(84) Benannte Vertragsstaaten:
**AT BE CH DE ES FR GB IT LI NL**

(30) Priorität: **17.04.1998 DE 19817113**

(43) Veröffentlichungstag der Anmeldung:
**12.04.2000 Patentblatt 2000/15**

(73) Patentinhaber: **BASF AKTIENGESELLSCHAFT**
**67056 Ludwigshafen (DE)**

(72) Erfinder:
- **AUER, Heinz**
  **D-68809 Neulussheim (DE)**
- **CIPRIAN, Jürgen**
  **D-67071 Ludwigshafen (DE)**
- **FRANZ, Lothar**
  **D-67112 Mutterstadt (DE)**
- **FRANZISCHKA, Wolfgang**
  **D-67227 Frankenthal (DE)**
- **IFFLAND, Gabriele**
  **D-67071 Ludwigshafen (DE)**
- **WECK, Alexander**
  **D-67251 Freinsheim (DE)**
- **WEINLE, Werner**
  **D-67159 Friedelsheim (DE)**

(74) Vertreter: **Isenbruck, Günter, Dr. et al**
**Isenbruck, Bösl, Hörschler, Wichmann, Huhn,**
**Patentanwälte**
**Theodor-Heuss-Anlage 12**
**68165 Mannheim (DE)**

(56) Entgegenhaltungen:
EP-A- 0 599 309          WO-A-93/18083
WO-A-97/23559          US-A- 4 230 892
US-A- 4 370 491

EP 0 991 695 B1

# EP 0 991 695 B1

**Beschreibung**

Die Erfindung betrifft ein Verfahren zur Herstellung von Polytetrahydrofuran mit endständigen Hydroxylgruppen, aus den entsprechenden acyloxygruppenhaltigen Polymeren durch Umesterung mit Alkoholen in Gegenwart eines alkali- oder erdalkalihaltigen Katalysators.

Im Stand der Technik ist es bekannt, Polytetrahydrofuran mit endständigen Hydroxylgruppen, im folgenden kurz als PTHF bezeichnet, unter Verwendung kationischer Katalysatorsysteme aus Tetrahydrofuran herzustellen. In einem ersten Schritt wird dabei ein Polytetramethylenether erhalten, dessen Endgruppen vom Initiatorsystem und Reaktionsmedium bestimmt sind. Diese Endgruppen im primär erhaltenen Polymer müssen dann in Alkoholfunktionen umgewandelt werden. Eine übliche hier verwendete Methode stellt die durch alkalische Katalysatoren initiierte Umesterung mit niederen Alkoholen dar. Als ein wirksamer Umesterungskatalysator ist Natriummethylat bekannt.

Wenn diese Umesterung in kontinuierlicher Betriebsweise durchgeführt werden soll, besteht allerdings das erhebliche Problem, daß die Reaktionslösung stark schäumt, was dazu führt, daß die nachgeschaltete Kolonne zur Abtrennung von Methanol und dem Azeotrop Methanol/Methylacetat durch die Anwesenheit von PTHF nicht mehr ihrer Trennaufgabe gerecht werden kann. Die Umesterung verläuft dann unkontrolliert, da erhebliche PTHF-Mengen unterschiedlichen Umsetzungsgrades zurückgefahren werden, so daß die Umesterung nur mit erheblich eingeschränkter Kapazität durchführbar ist.

Die EP-0 599 309 offenbart ein Verfahren zur Wiedergewinnung von Polyesterkomponenten, enthaltend Polyethylenterephthalat-Polyester, wobei das Verfahren die folgenden Schritte umfasst: Einführen von Glykol und Terephthalsäure(ester) in ein erstes Reaktionsgefäß und Erhitzen, Zugabe von Abfall-Polyester zu dem Gefäß und Bilden einer Schmelze; Überführen der Schmelze in ein zweites Reaktionsgefäß; Einleiten von überhitztem Methanol in die Schmelze unter Bildung einer Schmelze mit Polyestern niedrigen Molekulargewichts und Monomeren; Überführen dieser Schmelze von dem zweiten Reaktor in den ersten Reaktor und Rückgewinnen von Bestandteilen in Form eines Gasstroms, der aus dem zweiten Reaktor austritt.

Ausgehend von diesem Stand der Technik lag der vorliegenden Erfindung die Aufgabe zugrunde, ein Verfahren zur Herstellung von Polytetrahydrofuran mit endständigen Hydroxylgruppen aus den entsprechenden acyloxygruppenhaltigen Polymeren durch Umesterung mit Alkoholen bereitzustellen, das eine kontinuierliche Umesterung ohne störende Schaumbildung ermöglicht.

Diese Aufgabe wird erfindungsgemäß gelöst durch ein Verfahren, bei dem das entsprechende acyloxygruppenhaltige Polymer zusammen mit dem Alkohol und dem Katalysator in einen ersten Vorreaktor eingebracht, dort zumindest teilweise zu dem hydoxylgruppenhaltigen Polymer umgesetzt und die Reaktionslösung dem oberen Bereich einer Destillationskolonne zugeführt wird, deren unterem Bereich zusätzlich Alkohol in dampfförmiger Phase zugeführt wird.

Unter dem ersten Vorreaktor wird dabei ein Reaktionsbehälter verstanden, in dem das acyloxygruppenhaltige Polymer unter katalytischen Bedingungen mit dem Alkohol zu dem hydroxylgruppenhaltigen Polymer umgesetzt werden kann und der der Destillationskolonne vorgeschaltet ist.

Durch die WO 97/23559 ist zwar die Herstellung von Polytetrahydrofuran mit endständigen Hydroxylgruppen durch katalysierte Umesterung mit Alkoholen bekannt geworden, bei welcher das entsprechende acyloxygruppenhaltige Polymer, der Katalysator und der Alkohol dem oberen Bereich eine Destillationskolonne zugeführt werden, deren unterem Bereich zusätzlich Alkohol in dampfförmiger Phase zugeführt wird. Diese Reaktionsführung ist aber nicht geeignet, das starke Schäumen der Reaktionslösung bei der Umesterung zu unterbinden. Im Unterschied zu dem genannten Verfahren wird erfindungsgemäß das eigentliche Umsetzungsverfahren im wesentlichen nicht in der Destillationskolonne durchgeführt, sondern in dem ersten Vorreaktor. Dieser Vorreaktor dient als Verweilzeitbehälter der Gleichgewichtseinstellung für die Umsetzung zu den hydroxylgruppenhaltigen Polymeren.

Diesem ersten Vorreaktor nachgeschaltet ist die Destillationskolonne, die dem Strippen des sich bei der Umesterung z.B. bildenden Methylacetats dient, wodurch das Reaktionsgleichgewicht in Richtung auf das zu bildende umgeesterte Reaktionsprodukt verschoben wird. Als Strippgas wird dampfförmiger Alkohol im unteren Bereich der Destillationskolonne zugeführt.

Durch dieses Aufteilen der Reaktion in zwei Bereiche, nämlich der eigentlichen Umesterung in dem ersten Vorreaktor und dem Strippen des sich bei der Reaktion z.B. bildenden Methylacetats, erhält man in überraschender Weise ein Herstellungsverfahren, das frei ist von Störungen durch Schaumbildung.

In der Reaktionsführung besteht gegenüber dem in der weiter oben erwähnten WO 97/23559 offenbarten Verfahren der Unterschied, daß ein Phasenwechsel der kohärenten und der dispersen Phase zwischen dem ersten Vorreaktor einerseits und der Destillationskolonne andererseits vorgesehen ist.

In dem ersten Vorreaktor stellt die Flüssigkeit die kohärente Phase und der Dampf die disperse Phase dar. In der Destillationskolonne ist die kohärente Phase aber der Dampf in Form des in dampfförmiger Phase zugeführten Alkohols und die disperse Phase die dem oberen Bereich der Destillationskolonne aus dem ersten Vorreaktor zugeführte Flüssigkeit in Form eines Rieselfilms.

Bei der Durchführung des erfindungsgemäßen Verfahrens wird das umgesetzte Polymer in vorteilhafter Weise nach dem Passieren der Kolonne in deren unterem Bereich entnommen, während der Alkoholdampf die Kolonne im wesentlichen in entgegengesetzter Richtung durchläuft. Dabei reagiert dieser mit dem z.B. im Fall der PTHF-Herstellung im wesentlichen gebildeten Polytetrahydrofuranmonoacetat, was wiederum ein Verschieben des Reaktionsgleichgewichts in Richtung auf das gewünschte Reaktionsprodukt bewirkt.

Besonders bevorzugt ist es, die Destillationskolonne mit zumindest einem weiteren Vorreaktor zu verbinden, dem die die Kolonne passierende, zumindest teilweise zu dem hydroxylgruppenhaltigen Polymer umgesetzte Reaktionslösung zugeführt und von dort nach einer vorbestimmten Verweilzeit in die Kolonne zurückgeführt wird.

Es kann in einer weiteren Ausrührungsform des erfindungsgemäßen Verfahrens vorgesehen sein, daß jeder Vorreaktor zumindest einen Zufluß zu der Kolonne und einen Abfluß von der Kolonne aufweist, wobei zumindest ein Zufluß so angeordnet ist, daß er oberhalb des zumindest einen Abflusses in die Kolonne mündet. Durch diese Reaktionsführung wird eine Optimierung der Ausbeute erreicht.

Als besonders vorteilhaft im Hinblick auf eine Optimierung des Reaktionsumsatzes hat es sich ergeben, wenn die Destillationskolonne mit drei weiteren Vorreaktoren verbunden wird, denen nacheinander die die Kolonne passierende, zumindest teilweise zu dem hydroxylgruppenhaltigen Polymer umgesetzte Reaktionslösung zugeführt wird.

Das erfindungsgemäße Verfahren kann für eine Umsetzung verwendet werden, bei der als acyloxygruppenhaltiges Polymer Polytetrahydrofurandiacetat, im folgenden kurz als PTHF- DiAc bezeichnet, während die Kurzform PTHF das umgesetzte Endprodukt meint, als Alkohol Methanol und als alkali- oder erdalkalihaltiger Katalysator Natriummethylat eingesetzt wird. Bei dieser Umsetzung in dem der Kolonne vorgeschalteten ersten Vorreaktor reagiert - wie kinetische Untersuchungen gezeigt haben - PTHF-DiAc relativ schnell zu dem Monoacetat, aus dem sich dann das Diol PTHF bildet. Es wird daher eines Reaktionslösung von dem ersten Vorreaktor in die Kolonne übergeführt, die zu einem großen Anteil aus bereits gebildetem Endprodukt, zu einem geringeren Anteil aus dem Monoacetat und außerdem aus Methylacetat, Methanol und dem verwendeten Katalysator besteht. Dabei kann das Verhältnis von bereits gebildetem Endprodukt zu dem als Zwischenprodukt entstehenden Monoacetat je nach dem Polymerisationsgrad des eingesetzten PTHF-DiAc, das z.B. zu PTHF 1000 oder PTHF 2000 umgesetzt werden soll, variieren.

Als erster oder weiterer Vorreaktor kann ein Rührkessel verwendet werden. Es ist aber auch ein Rohrreaktor oder ein anderer vergleichbarer Reaktionsbehälter geeignet. Dabei kann insbesondere der erste Vorreaktor mit einer separaten Heizung betrieben werden. Dies ist für die Reaktionsführung jedoch nicht zwangsläufig erforderlich. Außerdem kann der erste Vorreaktor eine Zuführung für Methanol-Dampf aufweisen, um diesen bereits in den ersten Vorreaktor einzuleiten und so die vollständige Umsetzung zu PTHF zu beschleunigen.

Im folgenden soll die Erfindung anhand von in der Zeichnung dargestellten Ausführungsbeispielen näher beschrieben werden.

Es zeigen:

Fig. 1    ein schematisches Diagramm der erfindungsgemäßen Reaktionsführung einer Polytetrahydrofuran-Umesterung gemäß einer ersten Ausführungsform,

Fig. 2    ein schematisches Diagramm der erfindungsgemäßen Reaktionsführung einer Polytetrahydrofuran-Umesterung gemäß einer zweiten Ausführungsform,

Fig. 3    ein schematischen Diagramm der erfindungsgemäßen Reaktionsführung gemäß einer dritten Ausführungsform und

Fig. 4    ein schematisches Diagramm der erfindungsgemäßen Reaktionsführung gemäß einer vierten Ausführungsform.

Im folgenden wird die Umesterung von PTHF-DiAc unter Verwendung von Methanol (MeOH) und Natriummethylat als Katalysator beschrieben.

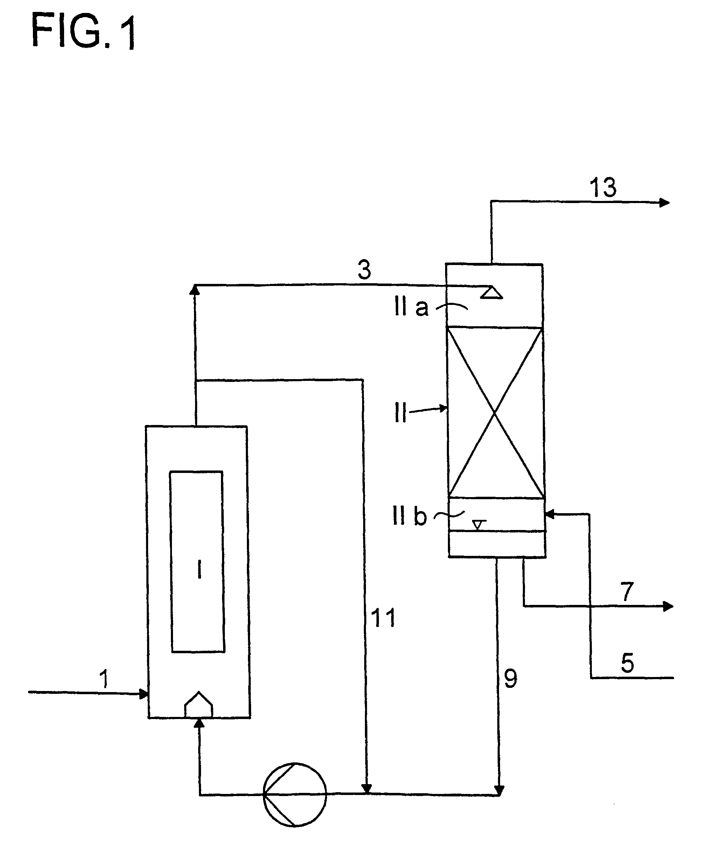

Wie in Fig. 1 dargestellt, werden PTHF-DiAc, Methanol und das als Katalysator verwendete Natriummethylat über Leitung 1 in einen ersten Vorreaktor I eingebracht. Dieser erste Vorreaktor I ist beispielsweise ein Strahlreaktor und dient als Verweilzeitbehälter für die Umesterungsreaktion.

Die Reaktion selbst verläuft in zwei Schritten, wobei zunächst das Monoacetat gemäß der Reaktionsgleichung I gebildet wird:

$$\text{PTHF} - \text{DiAc} + 1\ \text{MeOH} \quad \overset{\text{kat.}}{\rightleftarrows} \quad \text{PTHF} - \text{MonoAc} + 1\ \text{MeAc} \qquad \text{(I)}$$

Das Monoacetat reagiert dann in einem zweiten Reaktionsschritt gemäß der Reaktionsgleichung II zu dem gewünschten Endprodukt:

$$\text{PTHF} - \text{MonoAc} + 1\ \text{MeOH} \overset{\text{kat.}}{\rightleftarrows} \quad \text{PTHF} + \text{MeAc} \qquad\qquad \text{(II)}$$

Die Umsetzung zu PTHF erfolgt in dem ersten Vorreaktor I zunächst bis zu einem Umsatz von etwa 95% relativ rasch. Um einen weiteren, im wesentlichen vollständigen Umsatz zu erreichen, bedarf es einer gezielten Störung des Reaktionsgleichgewichts.

Über Leitung 3 wird die Reaktionsmischung aus dem ersten Vorreaktor I dem oberen Bereich IIa, d.h. im wesentlichen dem Kopfbereich, einer Kolonne II zugeführt. Die Reaktionsmischung besteht im wesentlichen aus bereits vollständig umgesetztem PTHF, PTHF-MonoAc, Methylacetat, Methanol und dem Katalysator. Das ursprünglich eingesetzte PTHF-DiAc konnte nicht mehr nachgewiesen werden.

Dabei erfolgt ein Wechsel der kohärenten und der dispersen Phase zwischen dem Vorreaktor I und der Kolonne II. In dem Vorreaktor I stellt die Flüssigkeit die kohärente Phase, der Dampf die disperse Phase dar. In der Kolonne II ist die kohärente Phase aber der Dampf in Form des in dampfförmiger Phase zugeführten Alkohols und die disperse Phase die dem oberen Bereich der Kolonne II aus dem Vorreaktor I zugeführte Flüssigkeit in Form eines Rieselfilms. Entsprechend weist die Kolonne II entweder Füllkörper oder eine strukturierte Packung auf, d.h. regellose oder geordnete Packungen oder Lochböden, aber keine Glockenböden oder Ventilböden.

Die Kolonne II wird in ihrem unteren Bereich IIb über Leitung 5 zusätzlich mit Methanol in dampfförmiger Phase gespeist. Dieser Methanoldampf durchläuft die Kolonne II in Richtung auf den Kolonnenkopf IIa und bewirkt so ein Strippen des Methylacetats, das sich gemäß der oben dargestellten Reaktionsgleichung bei der Umesterungsreaktion bildet. Dies bewirkt ein Verschieben des Gleichgewichts in Richtung auf das umgeesterte Reaktionsprodukt und bewirkt eine Verbesserung der Umsetzung zu PTHF, das der Kolonne II in deren unterem Bereich IIb über Leitung 7 entnommen wird.

Da die Kolonne I regellose oder geordnete Packungen oder Lochböden mit minimalem Hold up aufweist, kann der Methanoldampf diese Böden ohne nennenswerte Behinderung passieren. Bei der Verwendung von Glockenböden oder Ventilböden würde ein weitaus größerer Hold up auf dem jeweiligen Boden vorhanden sein und das Passieren des Methanoldampfes würde zu einem störenden Schäumen führen.

Gleichzeitig wird ein Teil dieses Produktstroms über Leitung 9 wieder dem Vorreaktor I zugeführt. Eine weitere Leitung 11 führt außerdem Reaktionslösung aus der Leitung 3, die den Rührkessel I mit der Kolonne II verbindet, zurück zu Leitung 9, wodurch ein Kreislauf gebildet wird, um die Umsetzung zu PTHF durch Störung des Reaktionsgleichgewichts weiter zu optimieren. Leitung 13 im Bereich des Kolonnenkopfes IIa dient zur Entfernung des Methanol/ Methylacetat-Gemisches, das anschließend zur Methanol-Rückgewinnung destillativ aufgearbeitet wird.

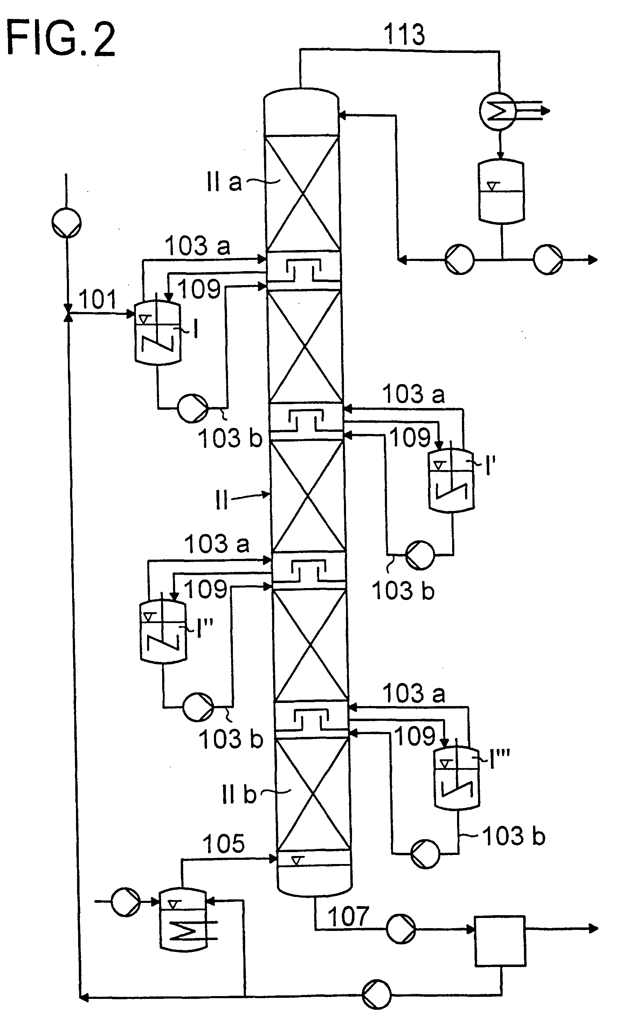

In Abb. 2 ist eine weitere Ausführungsform des erfmdungsgemäßen Verfahrens dargestellt. Gleiche Strukturelemente werden mit gleichen, jedoch gegenüber Fig. 1 um 100 erweiterten Bezugszeichen versehen. Die prinzipielle Verfahrensweise entspricht wieder der in Bezug auf Fig. 1 beschriebenen.

Die in dieser Ausführungsform eingesetzte Destillationskolonne II weist eine Metallpackung auf. Die Anzahl der theoretischen Stufen beträgt in etwa 22. Im Unterschied zu der ersten Ausführungsform werden 4 Rührkessel I, I', I'', I''' eingesetzt, die jeweils eine Brüden- bzw. Entlüftungsleitung 103a und eine Abflußleitung 103b zu der Kolonne II aufweisen. Diese Rührkessel I, I', I'', I''' sind beginnend im Bereich des Kolonnenkopfes IIa nacheinander angeordnet, so daß Reaktionslösung aus dem ersten Rührkessel I, der den ersten Vorreaktor I darstellt, über die Leitung 103b in die Kolonne II geführt wird, diese in Richtung auf den Kolonnenboden IIb passiert, bis über einen Fangboden eine dem weiteren Rührkessel I' zugeordnete Zuführleitung 109 erreicht wird, über die die Reaktionslösung in den Rührkessel I' als weiterer Verweilzeitbehälter für das Erreichen einer vollständigen Umsetzung zu PTHF durch weiteres, gezieltes Stören des Reaktionsgleichgewichts fließt.

Diese Verfahrensweise wiederholt sich entsprechend bei den weiteren Rührkesseln I'' und I'''. Es soll in diesem Zusammenhang darauf hingewiesen werden, daß auch eine Anordnung von 2, 3 oder mehr als 4 Rührkesseln den erfindungsgemäßen Erfolg herbeiführt, so daß die Anordnung von einem oder 4 Rührkesseln in den hier beschriebenen Ausführungsbeispielen exemplarischen Charakter hat.

Die Bezeichnungen Zufuhrleitung 109 und Abflußleitung 103b sind auf den jeweiligen Rührkessel bezogen. Entsprechend wird dem jeweiligen Rührkessel über Leitung 109 Reaktionslösung zugeführt, während diese über Leitung 103b in Richtung auf die Kolonne abfließt.

Das dampfförmige Methanol wird über Leitung 105 im Bereich des Kolonnensumpfs zugeführt und zusammen mit dem mitgeführten MeAc über Leitung 113 im Bereich des Kolonnenkopfes IIa entfernt.

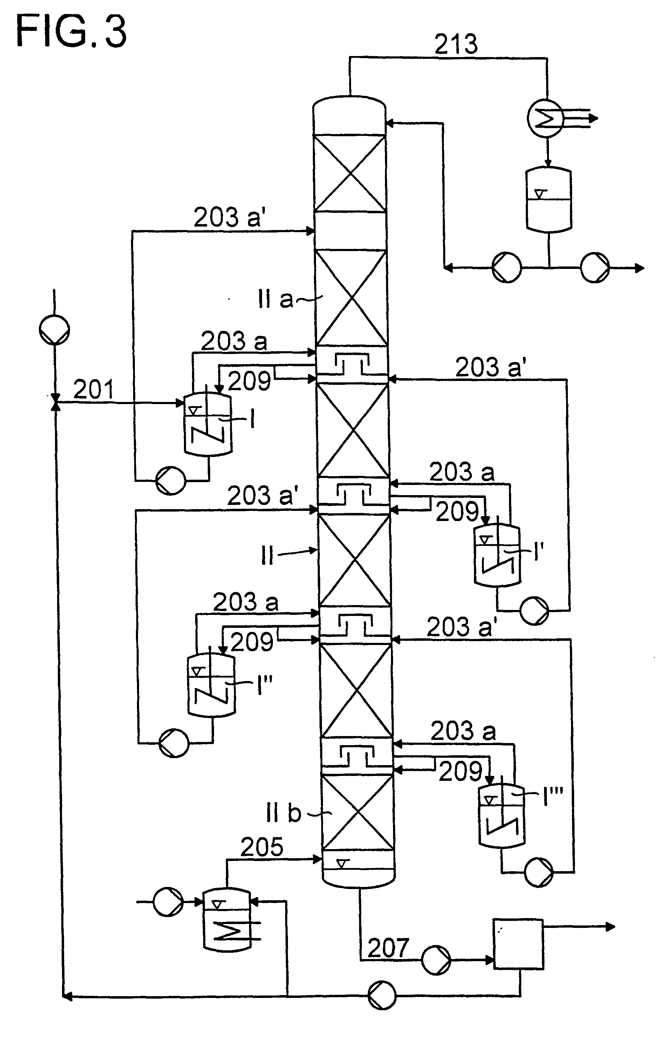

Eine weitere Ausführungsform des erfindungsgemäßen Verfahrens ist in Abb. 3 dargestellt. Auch hier werden gleiche Strukturelemente wieder mit gleichen, jedoch gegenüber Fig. 1 um 200 erweiterten Bezugzeichen versehen.

Die in Abb. 3 dargestellte Verfahrensführung unterscheidet sich von derjenigen in Abb. 2 dadurch, daß die Abflußleitung 203a' so angeordnet ist, daß sie oberhalb der jeweiligen Zuflußleitung 209 in die Kolonne II mündet. Daher ist bei der Verfahrensführung gemäß dieser Ausführungsform keine Abflußleitung vorgesehen, die der Abflußleitung 103b der zweiten Ausführungsform entspricht. Beim Passieren der Kolonne wird in günstiger Weise erreicht, daß ein Teil der Reaktionslösung in den jeweiligen Rührkesseln I, I', I'' und I''' selbst noch einmal rezirkulieren kann, bevor er zu dem nächsten Kessel gelangt, wodurch die Verweilzeit erhöht und damit die Umsetzung nochmals verbessert wird. Gleichzeitig wird beim Passieren der Kolonne durch eine bereits erfolgte Umsetzung gebildetes MeAc mit Hilfe des Strippgases Methanol entfernt und so das Reaktionsgleichgewicht günstig in Richtung auf das gewünschte umgeesterte Reaktionsprodukt beeinflußt.

Die Anzahl der theoretischen Böden der Destillationskolonne II beträgt 27. Dabei wurde die Anzahl der Packungen in der Destillationskolonne II in der Weise erhöht, daß gewährleistet ist, daß die Abflußleitung 203a' in der Weise mit der Kolonne II verbunden wird, daß die Reaktionslösung nochmals eine ganze Packungseinheit in der Kolonne II passieren kann, bevor sie auf die jeweilige Zuflußleitung 209 des jeweiligen Rührkessels I, I', I'', I''' trifft, in der sie zuvor verweilte.

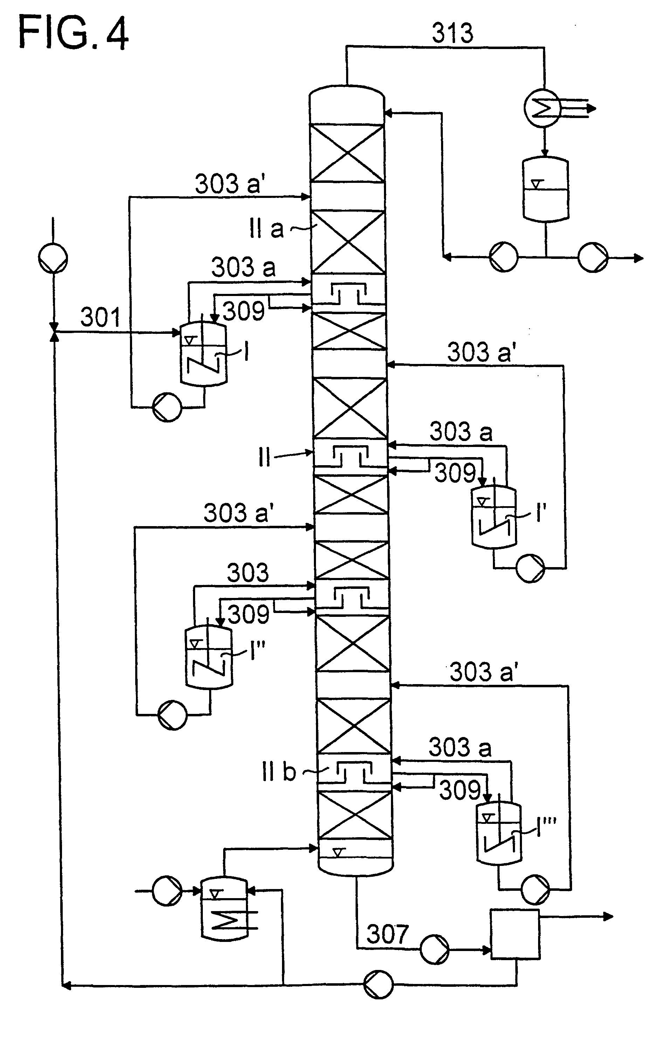

In Abb. 4 ist noch eine weitere Ausführungsform des erfindungsgemäßen Verfahrens dargestellt. Hier werden gleiche Strukturelemente wiederum mit gleichen, jedoch gegenüber Fig. 1 um 300 erweiterten Bezugzeichen versehen. Die prinzipielle Verfahrensweise entspricht wieder der zuvor schon beschriebenen.

Abb. 4 unterscheidet sich von der in Abb. 3 dargestellten Ausführungsform dadurch, daß eine Destillationskolonne II eingesetzt wird, deren Anzahl an theoretischen Stufen 40 beträgt, um so die Reaktionsführung nochmals zu optimieren. Während bei der in Figur 3 dargestellten Ausführungsform die Zuführleitung 209 des jeweils vorhergehenden Rührkessels in etwa in dem gleichen Bereich in die Kolonne II mündete, wie die Abflußleitung 203a' des jeweils nachfolgenden Rührkessels, wird durch die Erhöhung der Anzahl der theoretischen Stufen in dieser vierten Ausführungsform erreicht, daß nunmehr auch zwischen der Zuführleitung 309 des vorhergehenden Rührkessels und der Abflußleitung 303a' des nachfolgenden Rührkessels nochmals eine Packungseinheit angeordnet ist.

Die Mündungen der Zuführleitung 309 und der Abflußleitung 303a' in die Kolonne II sind daher so angeordnet, daß beispielsweise für den Rührkessel I eine obere Abflußleitung 303a' vorgesehen ist, deren Mündung in die Kolonne II in Richtung auf den Kolonnenrumpf IIb von der Zufuhrleitung 309 für Rührkessel I über eine Packungseinheit getrennt ist und sich zwischen der Mündung der Zufuhrleitung 309 des Rührkessels I und der nachfolgenden oberen Abflußleitung 303a' des nächstfolgenden Rührkessels I' wieder eine Packungseinheit befindet.

## Patentansprüche

1. Verfahren zur Herstellung von Polytetrahydrofuran mit endständigen Hydroxylgruppen aus den entsprechenden acyloxyhaltigen Polymeren durch Umesterung mit Alkoholen in Gegenwart eines alkali- oder erdalkalihaltigen Katalysators, **dadurch gekennzeichnet, daß** das entsprechende acyloxygruppenhaltige Polymer zusammen mit dem Alkohol und dem Katalysator in einen ersten Vorreaktor (I) eingebracht, dort zumindest teilweise zu dem hydroxylgruppenhaltigen Polymer umgesetzt und die Reaktionslösung dem oberen Bereich (IIa) einer Destillationskolonne (II) zugeführt wird, deren unterem Bereich (IIb) zusätzlich Alkohol in dampfförmiger Phase zugeführt wird.

2. Verfahren nach Anspruch 1, **dadurch gekennzeichnet, daß** das umgesetzte Polymer nach dem Passieren der Kolonne (II) in deren unterem Bereich (IIb) entnommen wird, und der Alkoholdampf die Kolonne (II) im wesentlichen in entgegengesetzter Richtung durchläuft.

3. Verfahren nach Anspruch 1 oder 2, **dadurch gekennzeichnet, daß** die Kolonne (II) mit zumindest einem weiteren Vorreaktor (I') verbunden wird, dem die die Kolonne (II) passierende, zumindest teilweise zu dem hydroxylgruppenhaltigen Polymer umgesetzte Reaktionslösung zugeführt und von dort nach einer vorbestimmten Verweilzeit in die Kolonne (II) zurückgeführt wird.

4. Verfahren nach einem der Ansprüche 1 bis 3, **dadurch gekennzeichnet, daß** jeder Vorreaktor (I;I';I'';I''') zumindest einen Zufluß (203a', 303a') zu der Kolonne (II) und einen Abfluß (209; 309) von der Kolonne (II) aufweist, wobei zumindest ein Zufluß (203a', 303a') oberhalb des zumindest einen Abflusses (209; 309) in die Kolonne (II) mündet.

5. Verfahren nach Anspruch 3 oder 4, **dadurch gekennzeichnet, daß** die Kolonne (II) mit drei weiteren Vorreaktoren (I';I'';I''') verbunden ist, denen nacheinander die die Kolonne (II) passierende, zumindest teilweise zu dem hydroxylgruppenhaltigen Polymer umgesetzte Reaktionslösung zugeführt wird.

**6.** Verfahren nach einem der Ansprüche 1 bis 5, **dadurch gekennzeichnet, daß** als acyloxygruppenhaltiges Polymer Polytetrahydrofurandiacetat, als Alkohol Methanol und als alkali- oder erdalkalihaltiger Katalysator Natriummethylat eingesetzt wird.

**7.** Verfahren nach einem der Ansprüche 1 bis 6, **dadurch gekennzeichnet, daß** als Vorreaktor (I;I';I'';I''') ein Rührkessel verwendet wird.

**8.** Verfahren nach einem der Ansprüche 1 bis 7, **dadurch gekennzeichnet, daß** als Vorreaktor ein Rohrreaktor (I; I';I'';I''')verwendet wird.

## Claims

**1.** A process for preparing polytetrahydrofuran with terminal hydroxyl groups, from the corresponding acyloxy-containing polymers by transesterification with alcohols in the presence of an alkali metal- or alkaline earth metal-containing catalyst, which comprises the appropriate acyloxy-containing polymer being introduced together with the alcohol and the catalyst into a first prereactor (I) and converted therein at least partly to the hydroxyl-containing polymer, and the reaction solution being fed into the upper zone (IIa) of a distillation column (II) into whose lower zone (IIb) alcohol in vapor phase is additionally fed.

**2.** A process as claimed in claim 1, wherein the reacted polymer is removed from the lower zone (IIb) of the column (II) after passing through it, and the alcohol vapor passes through the column (II) in essentially the opposite direction.

**3.** A process as claimed in claim 1 or 2, wherein the column (II) is connected to at least one other prereactor (I') into which is fed the reaction solution which passes through the column (II) and is at least partly converted into the hydroxyl-containing polymer, and which is returned from there, after a predetermined holdup time, to the column (II).

**4.** A process as claimed in any of claims 1 to 3, wherein each prereactor (I; I'; I''; I''') has at least one inflow (203a', 303a') into the column (II) and an outflow (209; 309) from the column (II), with at least one inflow (203a', 303a') being disposed so that it opens into the column (II) above the at least one outflow (209; 309).

**5.** A process as claimed in claim 3 or 4, wherein the column (II) is connected to three other prereactors (I'; I''; I''') into which is fed successively the reaction solution passing through the column (II) and at least partly converted into the hydroxyl-containing polymer.

**6.** A process as claimed in any of claims 1 to 5, wherein polytetrahydrofuran diacetate is employed as acyloxy-containing polymer, methanol is employed as alcohol, and sodium methoxide is employed as alkali metal- or alkaline earth metal-containing catalyst.

**7.** A process as claimed in any of claims 1 to 6, wherein a stirred vessel is used as prereactor (I; I'; I''; I''').

**8.** A process as claimed in any of claims 1 to 7, wherein a tubular reactor (I; I'; I''; I''') is used as prereactor.

## Revendications

**1.** Procédé de préparation de polytétrahydrofuranne contenant des groupes hydroxyle terminaux à partir des polymères à groupes acyloxy correspondants par transestérification avec des alcools en présence d'un catalyseur contenant un métal alcalin ou alcalino-terreux, **caractérisé en ce que** le polymère à groupes acyloxy correspondant est chargé avec l'alcool et le catalyseur dans un premier préréacteur (I), y est tout au moins partiellement converti en le polymère à groupes hydroxyle correspondants, et que la solution réactionnelle est envoyée dans la zone supérieure (IIa) d'une colonne de distillation (II), dans la zone inférieure (IIb) de laquelle est additionnellement introduit de l'alcool en phase gazeuse.

**2.** Procédé selon la revendication 1, **caractérisé en ce que** le polymère converti est soutiré après passage dans la colonne (II) dans sa zone inférieure (IIb), et que la vapeur d'alcool traverse la colonne (II) essentiellement en direction opposée.

**3.** Procédé selon la revendication 1 ou 2, **caractérisé en ce que** la colonne (II) est reliée à au moins un autre préréacteur (I'), auquel est envoyée la solution réactionnelle traversant la colonne (II), au moins en partie convertie en le polymère à groupes hydroxyle correspondant, et de là, est renvoyée dans la colonne (II) après un temps de séjour prédéterminé.

**4.** Procédé selon l'une des revendications 1 à 3, **caractérisé en ce que** chaque préréacteur (I, I', I'', I''') présente au moins une amenée (203a', 303a') dans la colonne (II) et une sortie (209, 309) de la colonne (II), et qu'au moins une amenée (203a', 303a') débouche au-dessus de la au moins une sortie (209, 309) dans la colonne (II).

**5.** Procédé selon la revendication 3 ou 4, **caractérisé en ce que** la colonne (II) est reliée à trois autres préréacteurs (I', I'', I'''), auxquels est successivement envoyée la solution réactionnelle passant dans la colonne (II) et au moins partiellement convertie en le polymère à groupes hydroxyle.

**6.** Procédé selon l'une des revendications 1 à 5, **caractérisé en c que** l'on met en oeuvre comme polymère à groupes acyloxy du poly(diacétate de tétrahydrofuranne), comme alcool du méthanol et, comme catalyseur contenant un métal alcalin ou alcalino-terreux, du méthylate de sodium.

**7.** Procédé selon l'une des revendications 1 à 6, **caractérisé en ce que** l'on utilise comme préréacteur (I, I', I'', I''') une cuve à agitation.

**8.** Procédé selon l'une des revendications 1 à 7, **caractérisé en ce que** l'on utilise comme préréacteur un réacteur tubulaire (I, I', I'', I''').

# FIG.1

# FIG.2

# FIG.3

213

203 a'

II a

203 a

209

201

I

203 a'

209

II

203 a

209

I"

203 a'

203 a

209

I'"

II b

205

M

207

10

# FIG. 4